# EUROPEAN PATENT SPECIFICATION

(11) **EP 1 005 504 B1**
(45) Date of publication and mention of the grant of the patent: **24.04.2002**
(21) Application number: 98933384.4
(22) Date of filing: 10.07.1998
(51) Int. Cl.: C08J 7/04, C08G 18/62, C09D 175/00

(54) **COATING COMPOSITION FOR A PLASTIC FILM**
BESCHICHTUNGSZUSAMMENSETZUNG FÜR EINE KUNSTSTOFFFOLIE
COMPOSITION DE REVETEMENT POUR FILM PLASTIQUE

(30) Priority: 18.07.1997 EP 97870108
(43) Date of publication of application: 07.06.2000
(73) Proprietor: UCB, S.A., 1070 Bruxelles (BE)
(72) Inventor: BOBO, Pascale, Cockermouth Cumbria CA13 0PQ (GB); POWER, Gary, Silloth Cumbria CA5 4DT (GB)
(74) Representative: Lechien, Monique
(86) International application number: BE9800109
(87) International publication number: WO9903916

(56) References cited:
- EP-A- 0 661 320
- EP-A- 0 676 439
- WO-A-92/19289

## Description

The present invention relates to a coating composition for a plastic film. More specifically, the invention relates to a coating composition which improves the physical characteristics of a plastic film. Even more specifically, the invention relates to a coating composition which renders a plastic film receptive to inks. Particularly, the invention concerns a coating composition specifically designed to render a plastic film able to be computer imprinted using any of the available techniques.

Polyolefin films are very useful as protective packaging because they resist tearing and water penetration. However, a significant drawback to their use is the difficulty encountered in printing the film, with certain types of ink. Typically, polyolefin films have low surface energies which make them non-receptive to certain inks which tend to exhibit bad ink wetting properties; i.e. they fail to form a complete coating on the film; the ink forms into discrete beads and streaks on the film. Additionally, certain inks tend to dry slowly, smear easily and rub off once dry. These are serious problems particularly when plastic films are used for shipping articles which are often exposed to moisture and rough handling. To overcome these difficulties printed matter is usually applied to a paper label which is then attached to the wrapping but this is inconvenient and presents recycling problems because paper recycling is usually incompatible with plastic recycling.

A coating for a plastic film which comprises an amount of a particulate sufficient to improve the ink receptivity of the film is disclosed in the international patent application WO 96/23659. This coating contains an acrylic resin as binder.

European patent application 676439 relates also to a coating composition devised to improve the printability of a plastic film in a thermal transfer printing process. It comprises an aqueous dispersion of a radical polymer, a polyisocyanate crosslinker and a pulverulent pigment.

The radical polymer may contain minor amounts of (meth)acrylamide, of monomers containing carboxylic acid or anhydride groups or of hydroxylated monomers (such as hydroxyalkylesters of (meth)acrylic acid). The improved printability of the film is not evidenced and the only example shows that a composition comprising a resin based on (meth)acrylic acid and hydroxyalkylacrylate monomers, an isocyanate crosslinker and a silicium dioxide provides results which are similar to those obtained in the prior art in term of adhesion of the coating to the substrate and in term of rub resistance.

These results are not yet satisfactory.

Beside the printing properties of polyolefin films which may thus be improved by the use of these known coatings, there is another property which has to be correctly managed. It is indeed often necessary that the printed film be further imprinted with a specific variable information (bar code, batch number, "best before" date, coding ...). Available techniques for imprinting films include dot matrix, digital printing, industrial ink jet, thermal transfer and laser printing as well as typewriting and other printing techniques based on ink ribbon or carbon ribbon; the term computer imprinting is generically used in the present specification for all these imprinting techniques. The computer imprinting techniques have specific requirements which are not totally fulfilled with the acrylic coatings conventionally used to improve the printing properties. For example, dot matrix printing requires a coating with good absorbency properties, while thermal transfer requires an very high surface smoothness.

There remains therefore a need for a composition able to render a plastic film (eventually conventionally printed in a first stage) able to be further computer imprinted.

Another application for such a coating would be to render a label, tape or self adhesive material computer imprintable. Currently, address and mailing labels, bar code labels and price labels are mostly made of paper substrates. Plastic substrates, as substitutes for paper substrates, are ideally suited for these applications. Compared to paper, plastic substrates in these end use applications provide the advantages of water resistance, chemical resistance, scratch resistance, durability, insensitivity to relative humidity, and compatibility to recyclable plastic objects which have the plastic label affixed thereto. US Patent No. 5,215,817 discloses such a coating comprising a pigmented ethylene-acrylic copolymer dispersion. This requires a particularly complicated process wherein the coated film is transversally stretched after having been coated.

It remains therefore a need for a composition able to render a plastic film able to be computer imprinted.

It is an object of the invention to increase the ink receptivity of a plastic film and particularly, to render a film computer imprintable using any of the available techniques. Further, another object of the present invention is to provide a coated film which may be manufactured through a simple process which does not necessitate orientation or stretching operations consecutive to the coating step.

It has now been, discovered that, in case of plastic films, these problems may be solved with an aqueous coating composition which comprises (a) from 10 to 60% (by dry weight) of a water-dispersible copolymer comprising (a1) from 1 to 30% by weight, preferably from 3 to 10% by weight, of monomers selected from the group consisting of N-alkyl(meth)acrylamide and N-hydroxyalkyl(meth)acrylamide; and (a2) from 70% to 99% by weight, preferably from 90 to 97% by weight, of monomers selected from the group consisting of (meth)acrylic acid and alkyl (meth)acrylate, wherein the alkyl group contains straight or branched chains having from 1 to 8 carbon atoms; (b) from 3 to 40% preferably more than 5% (by dry weight) of a crosslinker for functional groups of the monomers of group (a1); and (c) from 13 to 85% (by dry weight) of ink receptive particles.

It is a feature of this invention to incorporate into the water-dispersible acrylic copolymer, monomers containing acrylamide groups which are able to be subsequently crosslinked. Comparison with commercial copolymers which do not incorporate N-alkyl(meth)acrylamide or N-hydroxyalkyl(meth)acrylamide functional groups has failed to provide acceptable results. The monomers are selected from the group consisting of N-alkyl(meth)acrylamide and N-hydroxyalkyl(meth)acrylamide. The best observed results are obtained when N-methylolmethacrylamide is used. With respect to the total weight of the different comonomers, it is essential that the amount of monomers containing N-alkyl(meth)acrylamide or N-hydroxyalkyl(meth)acrylamide groups is at least of 1%, preferably of 3%, otherwise the crosslinking is not sufficient and the scratch resistance is poor. On the other hand, this amount should not be higher than 30%, preferably not higher than 10% otherwise the emulsion will show high viscosity and the dry film will be too brittle.

Suitable other comonomers which may be incorporated into the water-dispersible acrylic copolymer are methyl, ethyl, propyl, butyl, etc. acrylate or methacrylate. Preferably, the acrylic copolymer is mainly based on methyl methacrylate, ethyl acrylate and N-methylolacrylamide, but excellent results have also been obtained with a copolymer mainly based on methyl methacrylate, butyl acrylate and N-methylolacrylamide. Commercial suitable water-dispersible copolymers are PLEXTOL BV 595, PLEXTOL BV 465 or PLEXTOL DV 475 (from BAYER).

The water-dispersible copolymer should be present in an amount of from 10 to 60% (by dry weight) of the coating composition.

Beside the water-dispersible copolymer, it is also essential that the coating composition contains a crosslinker for the N-alkyl(meth)acrylamide or N-hydroxyalkyl(meth)acrylamide functional groups in order to form a very strong polymeric matrix incorporating the ink receptive particles and maintaining them in place in and at the surface of the coating. Moreover, crosslinking of the coating provides exceptional scratch resistance.

According to the invention, the crosslinker should be present in the composition in an amount of from 3 to 40% (by dry weight). Preferably, the crosslinker is comprised in an amount of more than 5% to achieve a good scratch resistance.

Suitable crosslinkers for N-alkyl(meth)acrylamide or N-hydroxyalkyl(meth)acrylamide functional groups include isocyanate compounds such as for example aliphatic or cycloaliphatic polyisocyanates. As examples of suitable aliphatic diisocyanates, there may be mentioned 1,4-diisocyanatobutane, 1,6-diisocyanatohexane, 1,6-diisocyanato-2,2,4-trimethylhexane and 1,12-diisocyanatododecane either alone or in admixture. Particularly suitable cycloaliphatic diisocyanates include 1,3- and 1,4-diisocyanatocyclohexane, 2,4-diisocyanato-1-methylcyclohexane, 1,3-diisocyanato-2-methylcyclohexane, 1-isocyanato-2-(isocyanatomethyl)cyclopentane, 1,1'-methylenebis[4-isocyanatocyclohexane], 1,1'-(1-methylethylidene)bis[4-isocyanatocyclohexane], 5-isocyanato-1-isocyanatomethyl-1,3,3-trimethylcyclohexane (isophorone diisocyanate), 1,3- and 1,4-bis(isocyanatomethyl)cyclohexane, 1,1'-methylenebis[4-isocyanato-3-methylcyclohexane], 1-isocyanato-4(or 3)-isocyanatomethyl-1-methylcyclohexane either alone or in admixture. Suitable commercial crosslinkers are for example found in the BAYHYDUR (from BAYER) product range.

The ink receptive particles are incorporated in the composition in an amount of from 13 to 85% (by dry weight) of the coating composition. As indicated above, these particles are incorporated in a strong polymeric matrix and maintained in and at the surface of the coating. This allows the coating to be absorbent enough for dot matrix printing and its surface to be smooth enough for thermal transfer printing. Suitable ink receptive particles comprise inorganic pigments such as silica, calcium carbonate, titanium dioxide, talc, and aluminium silicates.

Optionally other conventional additives may be incorporated into the composition. Suitable additives are emulsifiers, anti-foaming agents, coalescing agents, dispersing agents, wetting agents, anti-settling agents, thickeners, flatting agents, stabilizers,...

The coating may be prepared according to the following procedure: water and suitable additives are mixed together in the vessel. The dispersion is then added under stirring. When the addition of the dispersion is completed, the ink receptive particles can be progressively incorporated while the stirrer is gradually speeded up accordingly to the viscosity increase. When the total amount of ink receptive particles is added the mixture is left under stirring. The time necessary for this operation will depend on the efficiency of the mixing/stirring system. Then the crosslinker has to be incorporated in the composition prior to application onto the base film.

The crosslinker may be incorporated directly into the composition or predispersed into water or solvent and then incorporated into the composition. The pot life of a system like this one is an important factor to keep in mind. The crosslinker has to be added at the last moment prior to application because from that moment the coating will be usable for a reduced period of time only. Therefore it is preferable to avoid contact between crosslinker and water (or humidity) before use.

Suitable substrates, which can be used in this invention, are any plastic films suitable for the desired end use application. Polyolefin films are preferred, especially oriented polypropylene films, and still more preferred is a multilayer oriented polypropylene film as disclosed in the European Patent Application No. 202812. The thickness of the substrate is not critical and may vary largely. Most often, films having a thickness comprised between 10 and 100 µm, preferably between 50 and 75 µm are used for label or tapes applications; thinner films may be used for packaging applications (for example between 10 and 50 µm).

According to the present invention, the coating may be applied at at least 3 g/m² and preferably at more than 5 g/m² on the substrate by the method of roll coating, blade coating, spray coating, air knife coating, brush coating, rod bar coating, reverse gravure, etc. on the substrate and then dried, for example, in a hot air oven. The present invention relates therefore also to a film coated with the composition according to the invention.

Applications of the coated film of the invention include computer imprintable facestocks for tapes, labels and self-adhesive materials as well as computer imprintable packaging films or sheets.

Generally, the invention relates to computer imprintable synthetic paper.

### EXAMPLES.

### A. Coating compositions.

A.1 An aqueous dispersion was prepared by mixing 46 parts by dry weight of an acrylic copolymer dispersion based on methyl methacrylate, ethyl acrylate and N-methylolmethacrylamide (PLEXTOL BV 595 from BAYER), 25 parts by weight of hexamethylene diisocyanate (BAYHYDUR 3100 from BAYER), 28 parts by weight of silica (23 parts of SILICA FK 500 LS from DEGUSSA and 5 parts of SIPERNAT 50S from DEGUSSA and 1 part by dry weight of anti-foaming agent (FOAMASTER NS-1 from HENKEL).
A.2 and A.3. Change in the nature of the water dispersible copolymer.
Two aqueous dispersions were prepared as in example A.1, but the acrylic copolymer dispersion was replaced with PLEXTOL BV 465 (from BAYER) at example A.2 and with PLEXTOL DV 475 (from BAYER) at example A.3.
A.4 to A.6. Change in the nature of the water dispersible copolymer (By way of comparison).
Three aqueous dispersions were prepared as in example A.1, but the acrylic copolymer dispersion was replaced with acrylamide based copolymers: UCETEX TDR (from UCB CHEMICAL) at example A.4 and with UCETEX TDC (from UCB CHEMICALS) at example A.5.
At example A.6, the acrylic copolymer was replaced with an hydroxylated acrylic copolymer (BAYHYDROL LS 2054 from BAYER).
A.7 and A.8 Change in the amount of crosslinker.
Aqueous dispersion were prepared as in example A.1 but the amount of crosslinker was varied as follows:

| Example | Parts of copolymer | Parts of crosslinker | Parts of ink receptive particles |
|---|---|---|---|
| A.7 | 59.5 | 3.2 | 36.3 |
| A.8 | 37.9 | 37.9 | 23.2 |

A.9 to A.11 Change in the amount of ink receptive particles.
Aqueous dispersion were prepared as in example A.1 but the amount of ink receptive particles was varied as follows (the ratio (copolymer)/(ink receptive particles) was kept constant):

| Example | Parts of copolymer | Parts ink receptive particles (total) | Parts of crosslinker |
|---|---|---|---|
| A.9 | 56.3 | 12.4⁽¹⁾ | 30.3 |
| A.10 | 55.3 | 13.9 | 29.8 |
| A.11 | 42.4 | 33.8 | 22.8 |

| | | | |
|---|---|---|---|
| ⁽¹⁾ By way of comparison. | | | |

The ink receptive particles were comprised by a mixture of 80 parts of a finely divided silica (SILICA FK 500 LS from DEGUSSA) and 20 parts of a high particle size silica (SIPERNAT 50S from DEGUSSA).
A.12 to A.15 Change in the nature of the ink receptive particles.
Aqueous dispersions were prepared as in example A.1 but the ink receptive particles were replaced with calcium carbonate (CALOPAKE F from RHONE POULENC) in example A.12, with titanium dioxide (TIOXIDE R-HD2 from TIOXIDE) in example A.13, with talc (LUZENAC 10 MOOS from LUZENAC) in example A.14 and with aluminium silicate (HUBER 90C from J.M. HUBER) in example A.15. In examples A.12 to A.15 the ratio Pigment Volumetric Concentration (PVC) on critical Pigment Volumetric Concentration (CPVC) had been kept equal to 1.

| Example | Parts of Copolymer | Parts of crosslinker | Parts of ink receptive particles |
|---|---|---|---|
| A.12 | 28.0 | 15.1 | 55.9 |
| A.13 | 11.4 | 6.5 | 81.1 |
| A.14 | 11.4 | 6.5 | 81.1 |
| A.15 | 16.2 | 8.9 | 73.9 |

### B. Coated films.

B.1 A sample of a polypropylene film (70 µm thick) was coated with the composition prepared at example A.1 at a rate of 5 g/m² (6.15 g/m² at example B.4 and 5.70 at example B.5).
B.2 to B.14 Coated films were prepared as in example B.1 but the composition used were those prepared respectively at example A.2 to A.14.

The coated films have then been tested for their oil absorption (or vamishability), roughness and absorption (or set off).
Their are many factors determining the final quality of the print onto a substrate. Among these, roughness, or rather the degree of smoothness, is one of the most important. Another important factor is the oil absorption of the substrate surface. At the moment of printing a quantity of ink or varnish is absorbed by the surface of the substrate. This amount is determined by the absorption of liquid in the surface recesses (roughness) and the absorption into the pores at the surface. The sum of the two phenomena is called: the oil absorption or vamishability. The reciprocal value of this is called printing penetration.
A third important factor is the absorption of the coating, which reflects the "absorption speed" with which the ink penetrates into the coating after printing. If the ink is absorbed too slowly or too fast, it may be the cause of problems. An absorption which is too slow may result in smearing because the ink does not dry fast enough. An absorption which is too fast may result in a reduction of the dry ink properties; as a consequent the binding agent for the most part penetrates into the coating while the pigments remain at the surface. Because of this, for instance, the abrasion resistance or gloss may be reduced.

The following table shows the results of these various tests with the coated films B.1 to B.15. In this table, column 1 indicates the coated film which is tested; column 2 indicates the result of the printing penetration test expressed in mm⁻¹; column 3 indicates the result of the absorption (or set off) test; and column 4 indicates the result of the roughness test expressed in cm³/m².

| Film of example | Printing penetration | Absorption | Roughness |
|---|---|---|---|
| B.1 | 13.0 | 0.19 | 2.45 |
| B.2 | 13.3 | 0.115 | 1.67 |
| B.3 | 13.2 | 0.16 | 2.12 |
| B.4 ⁽¹⁾ | 24.0 | 0.05 | 4.27 |
| B.5 ⁽¹⁾ | 20.7 | 0.40 | 3.38 |
| B.6 ⁽¹⁾ | 14.4 | 0.42 | 2.66 |
| B.7 | 13.0 | 0.045 | 2.95 |
| B.8 | 12.7 | 0.16 | 2.71 |
| B.9 ⁽¹⁾ | 10.6 | 0.295 | 1.76 |
| B.10 | 12.6 | 0.29 | 2.03 |
| B.11 | 13.9 | 0.08 | 2.65 |
| B.12 | 13.3 | 0.155 | 2.29 |
| B.13 | 12.3 | 0.245 | 1.22 |
| B.14 | 13.1 | 0.16 | 2.62 |
| B.15 | 14.4 | 0.12 | 2.34 |

| | | | |
|---|---|---|---|
| (1) By way of comparison. | | | |

### Printing penetration

The printing penetration was determined according to IGT REPROTEST W24 (January 1994). The principle of which is as follows:
Between a printing disc and a strip of the coated substrate to be tested, a drop of oil with a volume of 5.8 ± 0.3 mg is spread to a stain. The length of the stain increases when the roughness and/or absorption of the coating decreases.
A value of printing penetration lower than 12.0/mm denotes a poor absorption. As a consequence, with dot matrix imprinting for instance, it will cause smudges, which is not acceptable.
From these results, it can be seen that the amount of crosslinker incorporated into the composition is not really crucial as to the printing penetration; it can indeed vary from 3.2% of the composition to 37.9% without influencing the printing penetration (examples A.1, A.7 and
A.8). It appears also clearly that a large variety of ink receptive particles may be used (examples A. 1 and A. 12 to A. 15) as well as various water dispersible acrylic copolymers (example A.1 to A.3).
From the printing penetration point of view, it is however necessary that the composition comprises more than 12.4% by weight of ink receptive particles. Example A.9 shows indeed that with an ink receptive content of 12.4%, the printing penetration is only of 10.6 mm⁻¹ (see example A.9) which is unacceptable, while with an ink receptive content only slightly superior than 12.5% (see example A. 10), the printing penetration parameter is fully satisfactory.

### Absorption (set off).

The absorption of the surface (set off test) was determined according to the IGT REPROTEST W48 (October 1996). The principle of this measurement is as follows:
A strip of the coated film to be tested is printed under standard conditions with a penetration ink. After certain times this test strip is brought into contact with a blank strip of set off paper (coated paper). Part of the ink, which is still present at the surface of the printed strip, will smear on the set off strip. The more ink is being absorbed into the printed strip, the less ink will smear on the set off strip. The density of the smeared ink will be a value for the absorption. Since smearing mainly concerns the ink which is at the top of the surface of the coating, the test strip is printed with a hard (aluminium) printing form.
It has been determined that an absorption value higher than 0.2 or 0.3 provides bad results (smudging of prining ink).
From the results of the table, it is to be noted that the amount of crosslinker incorporated into the composition is not really crucial as to the absorption parameter; it can indeed vary from 3.2% of the composition to 37.9% without influencing the absorption value (examples A.1, A.7 and A.8). It appears also clearly that a large variety of ink receptive particles may be used (examples A.1 and A.12 to A.15) as well as various water dispersible acrylic copolymers (example A.1 to A.3). It appears however that a copolymer based on acrylamide or hydroxylated acrylic monomers is not satisfactory (examples A.4 to A.6).
It has also been observed that the film B.6 (coated with an hydroxylated acrylic resin) presents absorption problems which, with time, turn to ink fixation problem.
Again, it appears that the amount of ink receptive particles incorporated into the coating is important. 12.4% of ink receptive particles by weight of the composition seems indeed to be the limit under which the composition does not furnish an acceptable absorption value.

### Roughness.

The roughness of the substrate surface was determined according to the IGT REPROTEST W28 (January 1994) based on the following principle: a small drop of water (with an accurately determined volume) is rolled out between two identical substrate surfaces at high speed. Due to the high speed only the surface recesses of the substrate will be filled. The area of the resulting blot on the sample is measured and the roughness of the substrate surface is calculated as the volume of water per square meter of substrate (cm³/m²).
The speed in this test is high, so that the time of contact between the water and the substrate is very short and the water cannot penetrate into the coating pores. To prevent initial penetration of the coloured water into the coating, the spot of application is closed using lacquer. The amount of water needed to carry out the test depends on the roughness of the substrate surface to be tested: with very smooth surfaces 1 mm³ may be sufficient, while for very rough surfaces a volume of up to 6 mm³ may be necessary.
For a computer imprintable substrate, it is essential that the roughness value be lower than 4.0 cm³/m², otherwise (with thermal transfer printing for instance), incomplete ink transfer occurs, only onto the high points of the rough surface.
From the results of the table, it is to be noted that the amount of crosslinker incorporated into the composition is not really crucial as to the roughness; it can indeed vary from 3.2% of the composition to 38.3% without influencing the roughness value (examples A.1, A.7 and A.8). It appears also clearly that a large variety of ink receptive particles may be used (examples A.1 and A.12 to A.15) as well as various water dispersible acrylic copolymers (example A.1 to A.3). The amount of ink receptive particles incorporated into the coating is not as important for the roughness as for the other parameters. Again, it appears that a copolymer containing acrylamide monomer is not satisfactory (example A.4).

## Claims

1. Aqueous coating composition for a plastic film which comprises
(a) from 10 to 60% (by dry weight) of a water-dispersible copolymer comprising
(a1) from 1 to 30% by weight, preferably from 3 to 10% by weight, of monomers selected from the group consisting of N-alkyl(meth)acrylamide and N-hydroxyalkyl(meth)acrylamide; and
(a2) from 70 to 99% by weight, preferably 90 to 97% by weight, of monomers selected from the group consisting of (meth)acrylic acid, and alkyl (meth)acrylate, wherein the alkyl group contains straight or branched chains having from 1 to 8 carbon atoms;
(b) from 3 to 40% (by dry weight) preferably more than 5% of a crosslinker for functional groups of the monomers of groups (a1);
(c) from 13 to 85% (by dry weight) of ink receptive particles.

2. Composition according to claim 1, **characterized in that** the monomer (al) is N-methylol(meth)acrylamide.

3. Composition according to anyone of claims 1 or 2, **characterised in that** the crosslinker is a polyisocyanate compound.

4. Composition according to claim 3, **characterised in that** the crosslinker is 1,6-diisocyanatohexane.

5. Composition according to anyone of claims 1 to 4, **characterised in that** the ink receptive particles are inorganic pigments.

6. Composition according to claim 5, **characterised in that** the inorganic pigment is selected from the group consisting in silica, calcium carbonate, titanium dioxide, talc, and aluminium silicates.

7. Process for imparting computer imprintable character to a plastic film comprising the step of coating a plastic film with a composition according to anyone of claims 1 to 6.

8. Synthetic paper, computer imprintable facestock for labels, tapes or self-adhesive materials comprising a plastic substrate coated with a composition according to anyone of claims 1 to 6.

9. Computer imprintable packaging film comprising a plastic substrate coated with a composition according to anyone of claims 1 to 6.

10. Method for printing synthetic paper, computer imprintable facestock for labels, tapes or self-adhesive materials according to claim 8 or a packaging film according to claim 9 with any computer imprinting technique.

## Patentansprüche

1. Wäßrige Beschichtungszusammensetzung für eine Kunststoff-Folie, die
(a) 10 bis 60% (bezogen auf das Trockengewicht) eines wasserdispergierbaren Copolymers mit
(a1) 1 bis 30 Gew.-%, vorzugsweise 3 bis 10 Gew.-%, an Monomeren aus der Gruppe bestehend aus N-Alkyl(meth)acrylamid und N-Hydroxyalkyl (meth)acrylamid und
(a2) 70 bis 99 Gew.-%, vorzugsweise 90 bis 97 Gew.-%, an Monomeren aus der Gruppe bestehend aus (Meth)acrylsäure und Alkyl(meth)acrylat, wobei die Alkylgruppe gerade oder verzweigte Ketten mit 1 bis 8 Kohlenstoffatomen aufweist;
(b) 3 bis 40% (bezogen auf das Trockengewicht), vorzugsweise mehr als 5%, eines Vernetzers für funktionelle Gruppen der Monomere der Gruppen (a1);
(c) 13 bis 85% (bezogen auf das Trockengewicht), an farbannehmenden Teilchen
enthält.

2. Zusammensetzung nach Anspruch 1, **dadurch gekennzeichnet, daß** es sich bei dem Monomer (a1) um N-Methylol(meth)acrylamid handelt.

3. Zusammensetzung nach Anspruch 1 oder 2, **dadurch gekennzeichnet, daß** es sich bei dem Vernetzer um eine Polyisocyanatverbindung handelt.

4. Zusammensetzung nach Anspruch 3, **dadurch gekennzeichnet, daß** es sich bei dem Vernetzer um 1,6-Diisocyanatohexan handelt.

5. Zusammensetzung nach einem der Ansprüche 1 bis 4, **dadurch gekennzeichnet, daß** es sich bei den farbannehmenden Teilchen um anorganische Pigmente handelt.

6. Zusammensetzung nach Anspruch 5, **dadurch gekennzeichnet, daß** das anorganische Pigment aus der Gruppe bestehend aus Siliciumoxid, Calciumcarbonat, Titandioxid, Talk und Aluminiumsilicaten stammt.

7. Verfahren zum Computerbeduckbarmachen einer Kunststoff-Folie, bei dem man eine Kunststoff-Folie mit einer Zusammensetzung nach einem der Ansprüche 1 bis 6 beschichtet.

8. Computerbedruckbares Trägermaterial aus synthetischem Papier für Etiketten, Bänder oder Selbstklebematerialien, enthaltend ein mit einer Zusammensetzung nach einem der Ansprüche 1 bis 6 beschichtetes Kunststoffsubstrat.

9. Computerbedruckbare Verpackungsfolie, enthaltend ein mit einer Zusammensetzung nach einem der Ansprüche 1 bis 6 beschichtetes Kunststoffsubstrat.

10. Verfahren zum Bedrucken eines computerbedruckbaren Trägermaterials aus synthetischem Papier für Etiketten, Bänder oder Selbstklebematerialien nach Anspruch 8 oder einer Verpackungsfolie nach Anspruch 9 mit einer beliebigen Computerdrucktechnik.

## Revendications

1. Composition de revêtement aqueuse pour film plastique qui comprend
a) de 10 à 60% (en poids sec) d'un copolymère dispersable dans l'eau comprenant
(a1) de 1 à 30% en poids, de préférence de 3 à 10% en poids, de monomères choisis dans le groupe constitué par un N-alkyl(méth)acrylamide et un N-hydroxyalkyl(méth)acrylamide; et
(a2) de 70 à 99% en poids, de préférence de 90 to 97% en poids, de monomères choisis dans le groupe constitué par l'acide(méth)acrylique et un (méth)acrylate d'alkyle, où le groupe alkyle contient des chaînes linéaires ou ramifiées comportant de 1 à 8 atomes de carbone;
(b) de 3 à 40 % (en poids sec), de préférence plus de 5%, d'un agent de réticulation pour les groupes fonctionnels des monomères des groupes a1);
(c) de 13 à 85% (en poids sec) de particules réceptives à l'encre.

2. Composition selon la revendication 1, **caractérisée en ce que** le monomère (a1) est le N-méthylol(méth)acrylamide.

3. Composition selon l'une quelconque des revendications 1 ou 2, **caractérisée en ce que** l'agent de réticulation est un composé polyisocyanate.

4. Composition selon la revendication 3, **caractérisée en ce que** l'agent de réticulation est le 1,6-diisocyanatohexane.

5. Composition selon l'une quelconque des revendications 1 à 4, **caractérisée en ce que** les particules réceptives à l'encre sont des pigments minéraux.

6. Composition selon la revendication 5, **caractérisée en ce que** le pigment minéral est choisi dans le groupe constitué par la silice, le carbonate de calcium, le dioxyde de titane, le talc et les silicates d'aluminium.

7. Procédé pour conférer à un film plastique un caractère d'aptitude à l'impression informatique comprenant l'étape qui consiste à revêtir un film plastique avec une compostion selon l'une quelconque des revendications 1 à 6.

8. Papier synthétique, couche faciale d'étiquettes, rubans, matériaux autocollants, aptes à l'impression informatique et comprenant un substrat plastique revêtu d'une composition selon l'une quelconque des revendications 1 à 6.

9. Film d'emballage apte à l'impression informatique comprenant un substrat plastique revêtu d'une composition selon l'une quelconque des revendications 1 à 6.

10. Méthode d'impression de papier synthétique, de couches faciales d'étiquettes, rubans, matériaux autocollants, aptes à l'impression informatique, selon la revendication 8, ou film d'emballage selon la revendication 9, par n'importe quelle technique d'impression informatique.
